# EUROPÄISCHE PATENTSCHRIFT

(11) **EP 2 858 139 B1**
(45) Veröffentlichungstag und Bekanntmachung des Hinweises auf die Patenterteilung: **14.09.2016**
(21) Anmeldenummer: 13186921.6
(22) Anmeldetag: 01.10.2013
(51) Int. Cl.: H01M 2/08, B01J 19/00, B01D 61/28, C25B 9/00, F16J 15/00, F28F 3/10, H01H 50/00, H01M 8/0284, B29C 65/48, C09J 5/00, C25B 9/20, F16B 11/00, F28F 3/00, H01M 8/0286, H01M 8/0297

(54) **Elastomerdichtungen für Brennstoffzellen, Wärmetauscher und chemischen Reaktoren**
Elastomer seals for fuel cells, heat exchangers and chemical reactors
Joints élastomères pour piles à combustible, échangeurs de chaleur et réacteurs chimiques

(43) Veröffentlichungstag der Anmeldung: 08.04.2015
(73) Patentinhaber: Polyprocess Kunstharzverarbeitung GmbH, 97348 Rödelsee (DE)
(72) Erfinder: Block, Hermann, 97348 Rödelsee (DE)
(74) Vertreter: Schicker, Silvia

(56) Entgegenhaltungen:
- EP-A1- 1 075 034
- EP-A2- 1 073 138
- WO-A1-2007/033789
- US-A1- 2009 162 734
- US-A1- 2013 122 390

## Beschreibung

Die Erfindung betrifft ein Verfahren zur Herstellung von "Formed In Place Gaskets" (FIPG)-Dichtungselementen für geschlossene Funktionseinheiten von Brennstoffzellen, Wärmetauschern und chemischen Reaktoren, sowie die Verwendung einer reaktiven, flüssigen oder pastösen Zusammensetzung, die zu einem Elastomer gehärtet werden kann, als Vorstufe für diese Dichtungselemente.

Gegenwärtig werden in geschlossenen Funktionseinheiten von Brennstoffzellen, Wärmetauschern und chemischen Reaktoren zur Stoffumwandlung, Stofftrennung oder -vereinigung, zur elektrischen oder thermischen Behandlung im Allgemeinen vorgefertigte Flachdichtungen oder Rundschnüre (0-Ringe) bzw. Einlegedichtungen mit unterschiedlichen Profilen als Fügeelemente genutzt. Hierbei hat sich Teflon^{™} als Material der Wahl für kommerzielle Produkte etabliert. Insbesondere aufgrund der Eigenschaften wie Temperaturbeständigkeit, chemischer Inertheit und Langlebigkeit ist Teflon^{™} beispielsweise als Basismaterial für Einlegedichtung besonders geeignet. Im Falle mäßiger Temperaturbelastung (etwa 160°C bis 180°C) wird häufig auch EPDM (z.B. Keltan™) als Dichtelement in Form von O-Ringen oder Flachdichtung eingesetzt. Bei höheren Temperaturbeanspruchungen wird bedarfsweise auch Kapton™ eingesetzt.

Neben ihrer vorrangigen Wirkung zum verlustfreien Abschluss (Dichtung) des Apparates als eigene Einheit oder im funktionsbedingten Anschluss an Maschinen, andere Apparate oder Rohrleitungen erfüllen die Dichtungen eine Reihe weiterer Funktionen. Der Toleranzausgleich, die Verringerung bzw. die Vermeidung von mechanischen Spannungen und die elektrische Isolation in Elektrolyseuren, Batterien und Brennstoffzellen z.B. sind einige wesentliche Zusatzfunktionen.

Trotz aller Erfahrung treten unerwartet häufig Probleme mit Dichtungen dieses Konstruktions-Grundtyps auf. Leckagen mit der Folge von Produktverlusten und Qualitätsminderung, von Umweltverschmutzung und Personengefährdung und im Extremfall mit der Folge von Totalausfall der Komponente oder gesamten Anlage sind erfahrungsgemäß nicht völlig zu vermeiden. Ursachen für Komplikationen sind in der Regel Montage- und Überwachungsfehler, falsche Auswahl von Material und Dichtungstyp sowie thermische und mechanische Überlastung und Medienunverträglichkeiten. Es besteht daher ein Bedarf, die bekannten Dichtungen zu verbessern, und Dichtungen zu entwickeln, die den Teflon^{™}-Dichtungen bezüglich Herstellung und Materialeigenschaften überlegen sind.

Es lässt sich nachvollziehen, dass die Betriebsicherheits- und Funktionsprobleme mit steigender Belastung o.g. Art zunehmen. Zur Verbesserung der Montagesicherheit werden an geometrisch aufwendigen, unregelmäßig geformten Komponenten "Formed In Place Gaskets" (FIPG) genutzt, besonders, aber nicht ausschließlich in der Elektro- und Automobiltechnik. Es handelt sich dabei in der Regel um Einzelkomponenten, die mit einem bedarfsgerecht ausgewählten Material vorwiegend aus der Klasse der Polyurethane, Silikone oder auch der Polyolefine in Form einer flüssig aufgetragene Dichtungsgeometrie ausgerüstet werden. Nach erfolgter Vernetzung, die gegebenenfalls durch Temperaturerhöhung oder UV-Strahlung induziert und beschleunigt werden kann, werden die Komponenten an das zu fertigende Produkt montiert. Die Anforderungen in der Elektro- und Automobiltechnik sind jedoch von den Anforderungen beispielsweise in Brennstoffzellen unterschiedlich, sodass hier in der Regel Teflon^{™}-Dichtungen verwendet werden.

In der HT-PEM-Zelle (Hochtemperatur-Polyelektrolytmembran-) kommt zur Temperaturbelastung noch ein potentiell destruktiver chemischer Einfluss durch Phosphorsäure und deren Derivate sowie durch den Einfluss der Betriebsmedien sauerstoffhaltige Verbrennungsluft und Wasserstoff. FIPGs aus den oben beschriebenen Werkstoffen halten diesen Bedingungen allenfalls wenige Tage stand. Gefordert werden Lebensdauern von über 4000 Betriebsstunden, idealerweise von mehr als 20 000 Stunden. In dieser Zeit darf das Dichtungsmaterial nicht irreversibel verformt werden, nicht verspröden sowie nicht quellen und dabei seine mechanische Festigkeit verlieren. Ein hohes Maß an chemischer Inertheit ist weiter unabdingbar, da betriebsbedingte Zersetzungsprodukte oder ausgelaugte Inhaltsstoffe zur Deaktivierung des Platinkatalysators in der eletrochemisch wirksamen Membran führen.

EP 1 073 138 A2 beschreibt Dichtungselemente für Brennstoffzellen. Diese Dichtungselemente können aus verschiedensten Gummimaterialien, wobei FKMs als ein Beispiel unter vielen genannt sind, hergestellt werden. Das Aufbringen der Gummimaterialien erfolgt bevorzugt mittels Siebdruckverfahren.

Die vorliegende Erfindung soll die oben beschriebenen Nachteile überwinden und die bislang verwenden Dichtungen bzw. das Verfahren zu deren Herstellung verbessern.

Diese Aufgabe wird durch das Verfahren mit den Merkmalen des Anspruchs 1, sowie durch die neue Verwendung mit den Merkmalen des Anspruchs 6 gelöst.

Die vorliegende Erfindung ermöglicht den Ersatz von thermoplastischen oder hartelastischen Dichtungen, so wie beispielsweise Dichtungen aus Teflon^{™}, als Fügeelemente in Apparaten durch weichelastische Dichtungsmaterialien, die form- und konturgenau als reaktive Masse ein-, zwei- oder mehrkomponentig auf Bauteile aufgebracht wird und an Ort und Stelle, ggf. katalytisch aktiviert, zu einer gummielastischen Masse aushärtet.

Die erfindungsgemäß hergestellten Dichtungen finden ihre bevorzugte aber nicht ausschließliche Verwendung in Apparaten mit hoher thermischer Dauer- und /oder Wechsellast, in Anordnungen mit Kontakt zu oder zur Verarbeitung von kontaminationsempfindlichen, chemisch aggressiven, gesundheitsschädlichen und/oder gefährlichen Stoffen. Über den Stand der Technik hinaus beschreibt die Erfindung eine besonders vorteilhafte Bauweise für Apparate oder Apparateteile, die aus Scheiben, oder Platten in Stapelform montiert werden und zudem bei erhöhter Temperatur und Medienbelastung langlebige Funktion gewährleisten.

Die mittels der Erfindung hergestellten Funktionseinheiten können ein erheblich höheres Maß an Funktionssicherheit, Temperaturwechselverhalten und Lebensdauer aufweisen. Das erfindungsgemäße Herstellungsverfahren ist zudem insbesondere sehr einfach und daher kostengünstig für die erfindungsgemäßen Anwendungen, wie z.B. der Herstellung von Brennstoffzellen-Stacks, anwendbar.

Des Weiteren können die erfindungsgemäß hergestellten Dichtungselemente einen geringeren Druckverformungsrest (DVR, CS) aufweisen und weisen kein oder nur geringes Fließen auf. Die erfindungsgemäß verwendeten reaktiven Zusammensetzungen können bei der Verarbeitung eine lange offene Zeit aufweisen, sodass die zu verbindenden Komponenten nicht sofort miteinander in Kontakt gebracht werden müssen, falls ein Nachfolgendes Aushärten des Elastomers erwünscht ist. Zudem können FKM-Dichtungen im Vergleich mit Teflon^{™}-Dichtungen einen besseren Ausgleich von Fügetoleranzen und eine leichteres Einstellen des Drucks zwischen den zu verbindenden Komponenten ermöglichen. Beispielsweise wird das Einstellen des Packungsdruckes auf einen optimalen Kontakt von Membran, GDL (Gasdiffusionslage) und Elektrode in einer Brennstoffzelle erleichtert.

Nachfolgend werden einige Begriffe erläutert, die im Rahmen der Beschreibung der vorliegenden Erfindung verwendet werden.

Der Begriff "Reaktor" betrifft grundsätzlich geschlossene Apparate/Behälter zur Stoffumwandlung, Stofftrennung oder -vereinigung, und/oder zur elektrischen oder thermischen Behandlung.

Der Begriff "Elastomer", so wie im Rahmen der Erfindung verwendet, betrifft formfeste, aber elastisch verformbare, vernetzte Polymere, deren Glasübergangspunkt sich unterhalb der Einsatztemperatur befindet. Die Polymere können sich bei Zug- und Druckbelastung elastisch verformen, finden aber danach wieder in ihre ursprüngliche, unverformte Gestalt zurück. Zudem umfasst der Begriff "Elastomer" auch thermoplastischen Elastomere, welches Polymere sind, die sich bei Raumtemperatur vergleichbar den klassischen Elastomeren verhalten, sich jedoch unter Wärmezufuhr plastisch verformen lassen.

Der Ausdruck, "das Elastomer ist selbstklebend mit der Komponente verbunden", so wie hier verwendet, bedeutet, dass das Elastomer ohne zusätzliche Befestigungsmittel oder Kleber von alleine montagesicher mit der Komponente verbunden ist und beispielsweise durch die Schwerkraft nicht abgelöst wird.

Der Ausdruck "geschlossene Funktionseinheit", so wie hier verwendet, betrifft räumlich geschlossenen Einheiten, in denen Gase oder Flüssigkeiten eingeschlossen sind bzw. in die oder aus denen Gase oder Flüssigkeiten kontrolliert eingeleitet oder abgelassen werden können, beispielsweise ein Reaktor oder ein Kompartiment eines Reaktors. Die technisch gewünschte Funktionseinheit in einer Brennstoffzelle ist der Brennstoffzellenstapel, "Stack". Er besteht aus einer beliebigen Anzahl von Einzelelementen "Zelle", die physikalisch für sich gesehen bereits eine Funktionseinheit darstellen. Die Serienschaltung "Stack" bewirkt eine additive Erhöhung der elektrischen Zelleneinzelspannung zum Zwecke der technischen Verwertbarkeit der Stromquelle.

In der geschlossenen Funktionseinheit schließt das erfindungsgemäß hergestellte Dichtungselement bevorzugt einzelne Kompartimente gegeneinander ab. Beispielsweise kann ein Kompartiment eines Brennstoffzellen-Stacks, das Luft oder Sauerstoff enthält, mittels des Dichtungselements gegenüber einem Kompartiment, das Wasserstoff enthält, abgedichtet werden. Die Gesamtanordnung des Brennstoffzellen-Stacks stellt dann eine Funktionseinheit dar.

Der Begriff "vernetzt" ist bedeutungsgleich mit dem Begriff "quervernetzt", so wie er im Zusammenhang mit dem Härten von Elastomeren ebenfalls allgemeine Verwendung findet.

Der Begriff "Fluorelastomer" betrifft fluorierte Derivate von Kohlenwasserstoffpolymeren. Man unterscheidet im Wesentlichen die Klassen FKM (teilweise fluoriert), FFKM, (vollständig fluoriert) und FEPM, (Perfluoralkoxy-Gruppen enthaltend). Alle Klassen sind in der Regel Co-Polymere (Di- bis Pentapolymere) aus den Monomeren Vinylidenfluorid VDF, Hexafluorpropylen HFP, Tetrafluorethylen TFE, Perfluormethylvinylether PMVE, ggf. Ethylen (eine Definition dieser Kategorien findet sich in ASTM D1418).

Die Begriffe "flüssig" und "pastös", so wie hier verwendet, betreffen einen Viskositätszustand der Zusammensetzung, der es erlaubt, die Zusammensetzung in der gewünschten Geometrie und Menge auf die Komponente aufzubringen.

Im Nachfolgenden wird der Begriff "Dichtungselement" für eine Dichtung verwendet, die unabnehmbar mit den zu verbindenden Komponenten in Kontakt steht. Bevorzugt ist die Dichtung zumindest von einer der zu verbindenden Komponenten nicht abnehmbar, sondern ist montagesicher, formschlüssig selbstklebend verbunden. Die Funktionseinheit lässt einen kontrollierten Austausch von Gasen und Flüssigkeiten innerhalb der Funktionseinheit zu.

Die vorliegende Erfindung betrifft daher ein Verfahren zur Herstellung einer geschlossenen Funktionseinheit einer Vorrichtung, wobei die Vorrichtung ausgewählt ist aus der Gruppe bestehend aus Brennstoffzellen, Wärmetauschern und chemischen Reaktoren, von Elektrolysezellen, Batterien, Dialysatoren oder Kontaktoren, d.h. Reaktoren zur Stoffumwandlung, Stofftrennung oder -vereinigung, zur elektrischen oder thermischen Behandlung, wobei die geschlossene Funktionseinheit mindestens ein Dichtungselement aus einem Elastomer enthält, umfassend die Schritte:
(i) Bereitstellen von mindestens zwei, durch ein oder mehrere Dichtungselemente zu verbindende, Komponenten der Funktionseinheit;
(ii) Aufbringen einer reaktiven, flüssigen oder pastösen Zusammensetzung, die durch Vernetzen zu einem Elastomer gehärtet werden kann, auf mindestens eine der Komponenten aus Schritt (i);
(iii) Durchführen einer Schrittabfolge (A) oder (B):
   Schrittabfolge (A)
      (AI) Vollständiges, oder teilweise Trocknen und/oder teilweise Härten der reaktiven, flüssigen oder pastösen Zusammensetzung, die auf der/den Komponente(n) aus Schritt (ii) aufgebracht ist, um eine oder mehrere, mit der/den Komponente(n) selbstklebend verbundene Vorstufe(n) für (ein) Dichtungselement(e), zu erhalten;
      (AII) In-Kontakt-Bringen der Komponente(n) aus Schritt (AI) mit der/den zu verbindenden Komponente(n);
      (AIII) Härten der Vorstufe(n) für (ein) Dichtungselement(e) auf der/den Komponente(n) aus Schritt (AII), wobei ein Elastomer erhalten wird, um ein oder mehrere, mit der/den Komponente(n) selbstklebend verbundene(s) Dichtungselement(e), zu erhalten;
   Schrittabfolge (B)
      (BI) Härten der reaktiven, flüssigen oder pastösen Zusammensetzung, nach dem Entfernen von Lösungsmittel, die auf der/den Komponente(n) aus Schritt (ii) aufgebracht ist, wobei ein Elastomer erzeugt wird, um ein oder mehrere, mit der/den Komponente(n) selbstklebend verbundene(s) Dichtungselement(e), zu erhalten; und
      (BII) In-Kontakt-Bringen der Komponente(n) aus Schritt (BI) mit der/den zu verbindenden Komponente(n); und
(iv) Erhalten der geschlossenen Funktionseinheit; wobei
die reaktive, flüssige oder pastöse Zusammensetzung ein oder mehrere Polymere enthält, ausgewählt aus der Gruppe bestehend aus fluorierten Kohlenwasserstoffpolymeren, die zu Elastomeren vernetzt werden können; und
die reaktive, flüssige oder pastöse Zusammensetzung durch Druckluft oder Pumpen mittels einer Dosiernadel oder einer Spraydüse kontinuierlich, bahngesteuert oder im Jet-Verfahren bahn- oder matrixgesteuert diskontinuierlich im Punktraster aufgetragen wird.

In Schritt (iv) werden die miteinander verbundenen Komponenten zu einer Funktionseinheit zusammengefasst.

Falls reaktive, flüssige oder pastöse Zusammensetzungen verwendet werden, die Lösungsmittel enthalten, ist es bevorzugt, vor einem (ersten) Härtungsschritt einen Trocknungsschritt zur Entfernung mindestens eines Teils des Lösungsmittels durchzuführen.

Im Rahmen der Erfindung dient das Dichtungselement bevorzugt als Fügeelement, das die zu verbindenden Komponenten direkt oder indirekt auf Abstand hält. "Direkt auf Abstand halten" bedeutet, dass sich die Komponenten nicht gegenseitig, jedoch aber jeweils das Dichtungselement berühren. Bevorzugt sind die Komponenten dann nicht noch durch andere Elemente, wie z.B. Schrauben, miteinander verbunden. "Indirekt auf Abstand halten" bedeutet, dass sich die Komponenten nicht gegenseitig berühren, jedoch aber über das Dichtungselement in Kombination mit einem Distanzkörper (Spacer), in Verbindung stehen. Bevorzugt sind auch hier die Komponenten dann nicht noch durch andere Elemente, wie z.B. Schrauben, miteinander verbunden.

Die in Schritt (i) bereitgestellten Komponenten einer geschlossenen Funktionseinheit werden weiter unten näher beschrieben. Gegebenenfalls werden die Komponenten vorbereitet, beispielsweise gereinigt, um für das Aufbringen des Dichtungselements bereit zu sein.

Die zu verbindenden Komponenten können die Form von Scheiben, oder Platten, beispielsweise geformte oder geprägte Platten aufweisen, und wobei benachbarte Scheiben oder Platten durch ein oder mehrere Dichtungselemente, oder durch ein oder mehrere Dichtungselemente in Kombination mit einem Distanzkörper (Spacer), in einer Stapelform miteinander verbunden werden.

In Funktionseinheiten von Brennstoffzellen verbinden die Dichtungselemente bevorzugt die Bipolarplatten (jeweils einseitig Anode und Kathode) des Brennstoffzellen-Stacks. Eine Abdichtung der innenliegenden Membran kann oder muß entsprechend der konstruktiven Auslegung der Einzelzelle ebenfalls durch das erfindungsgemäße Verfahren bewirkt werden.

In Funktionseinheiten von Reaktoren, wie beispielsweise einem Mikroreaktor, verbinden die Dichtungselemente bevorzugt benachbarte Wände miteinander, um einen geschlossenen Reaktorraum zu bilden. In Funktionseinheiten von Wärmetauschern verbinden die Dichtungselemente bevorzugt benachbarte Platten miteinander, um eine sichere Phasentrennung der im thermischen Kontakt stehenden Medien zu gewährleisten. In Funktionseinheiten von Elektrolysezellen verbinden die Dichtungselemente bevorzugt benachbarte Platten des Elektrolysezellen-Stacks miteinander. In Funktionseinheiten von Batterien bilden die Dichtungselemente bevorzugt die Außenabdichtung der Einzelzelle. Außerdem können sie die benachbarten Batteriezellen des Batterie-Stacks miteinander verbinden. In Funktionseinheiten von Dialysatoren und Kontaktoren gilt derselbe methodische Ansatz wie auch bei Brennstoffzellen. Es ist durch das erfindungsgemäß hergestellte Dichtungssystem zunächst eine betriebssichere, zuverlässige Trennung von Reaktionsmedien bzw. Stoffströmen gewährleistet, wobei zwischen mindestens zwei Phasen über eine Membran oder eine (mikro)poröse Fritte ein kontrollierter Austausch von gewissen Inhaltsstoffen bestimmungsgemäß erfolgen kann.

Die Erfindung ist für die Anwendung in Brennstoffzellen, insbesondere HT-PEM-(Hochtemperatur-Polymerelektrolyt) Brennstoffzellen besonders bevorzugt. Die Erfindung ist für die Anwendung in Reaktoren, bevorzugt Mikroreaktoren, geeignet, wobei diese Reaktoren in der chemischen oder biotechnologischen Prozesstechnik Verwendung finden. Grundsätzlich kann ein Dichtungselement, je nach gewünschter Anwendung, als elektrischer Isolator zwischen räumlich getrennten, leitfähigen Komponenten dienen.

Die zu verbindenden Komponenten oder zumindest deren Oberflächen können beispielsweise aus Graphit, Kunstharz, Diamant oder Metall, ebenfalls auch Glas und Keramik, gegebenenfalls auch in Form von Fritten, sein. Beispielsweise können sie kunstharzgebundene oder metallische, beispielsweise edelmetallbeschichtete (Au, Pt, Pd, Ir) Komponenten, oder diamantbeschichtete Komponenten sein.

Die Distanzkörper (Spacer) können beispielsweise chemisch inerte, temperaturbeständige Kugeln oder andere regelmäßig geformte Körpern, wie Quader oder Platten sein.

Das erfindungsgemäß hergestellte Dichtungselement ermöglicht das Bereitstellen von geschlossenen Funktionseinheiten, in denen das Dichtungselement nicht nur einen Schutz gegen den unerwünschten Stoffaustritt bzw. das Eindringen von Fremdmedien in Kompartimente der geschlossenen Funktionseinheit gewährleisten soll, sondern es übernimmt darüber hinaus eine wesentliche Rolle als Fügeelement.

Die reaktive, flüssige oder pastöse Zusammensetzung kann ein oder mehrere unterschiedliche, zu Elastomeren oder thermoplastischen Elastomeren vernetzbare, Polymere oder ein oder mehrere unterschiedliche, zu Elastomeren oder thermoplastischen Elastomeren vernetzbare, Prepolymere, oder eine Mischung dieses/dieser Polymer(e) und dieses/dieser Prepolymer(e) enthalten, und wobei die Zusammensetzung zudem bevorzugt ein oder mehrere Stoffe, ausgewählt aus der Gruppe bestehend aus Vernetzern, Katalysatoren, Füllstoffen, Alterungs- und Lichtschutzadditiven, Haftvermittlern, Lösungsmittel und weiteren Funktionsadditiven, enthält. Üblicherweise sind ein oder mehrere Vernetzer, z.B. Triallyltrimellithate (TATM), Triallylcyanurate (TAC) oder bevorzugt, Triallylisocyanurat (TAIC) und ein oder mehrere Katalysatoren enthalten. Geeignete Katalysatoren sind dem Fachmann bekannt und umfassen beispielsweise Peroxide wie Dicumylperoxid DCP oder Di-t-Butylperoxyhexan DBPH für die bevorzugt verwendete Gruppe der peroxidisch vernetzbaren Basispolymere.

Eine andere Gruppe von FKM-Polymeren wird anionisch vernetzt, bevorzugt von Bisphenol AF (2,2-bis-4,4'-Hydroxyphenyl-1,1,1,3,3,3-hexafluoropropan) in Gegenwart von quartären Amonium- oder Phosphoniumsalzen. In letzteren Formulierungen sind Säurefänger und/oder Coreagenzien wie Calciumhyroxid und Magnesiumoxid sowie Zinkoxid im Bereich von 1 bis 10 Gewichtsprozent, bezogen auf das Basispolymer (phr) gebräuchlich.

Der flüssige oder pastöse Zustand der Zusammensetzung kann beispielsweise durch die Menge an Lösungsmittel (eine größere Menge Lösungsmittel erniedrigt die Viskosität) oder durch Erhöhung der Temperatur der Zusammensetzung während des Aufbringens erreicht/kontrolliert werden.

Falls ein Lösungsmittel verwendet wird, ist es bevorzugt, das Lösungsmittel in einer Menge einzusetzen, so dass die Viskosität der reaktiven Zusammensetzung bei der gewünschten Aufbringungstemperatur flüssig oder pastös ist. Beispielsweise kann die Viskosität so eingestellt werden, dass die Zusammensetzung mit einer Spritze in der gewünschten Form, beispielsweise als Naht mit gewünschtem Durchmesser, aufgetragen werden kann. Dabei stellt man zweckmäßigerweise die Viskosität der Lösung entsprechend dem Materialbedarf des Dichtungsdesigns ein. Eine höhere, stärkere Dichtung wird man aus einer höher viskosen Lösung mit höherem Feststoffgehalt aus Düsen oder Nadeln mit größerem Durchmesser auftragen können. Die Durchmesser der Auftragsorgane liegen in der Regel zwischen 0,05 mm bis 10 mm. Die Dosierung des Volumenstromes erfolgt durch Kolben-, Schlauch und besonders bevorzugt durch Schneckenexenter- oder Zahnradpumpen. Eine weitere besonders bevorzugte Dosiermethode ist die berührungslose Jet-Dispensertechnik, gesteuert durch Piezoventile. Hier erfolgt die Dosierung nicht durch eine kontinuierlich ausgetragene Flüssigkeits- oder Pastennaht, sondern diskontinuierlich in diskreten Tröpfchen. Mit einer Auflösung bis in den Submikroliterbereich und lateralen Toleranzen um < 0,1 mm lassen sich Dosierraten von 150 Hz erreichen. Mit Ventilen von Nordson EFD (Pico™ als Jet-Ventil (berührungslos)) oder als Nadelventil lassen sich Dichtungsgeometrien reproduzierbar und schnell aufbauen.

Als Funktionsadditiv kann beispielsweise Ruß oder ein mineralischer Füllstoff enthalten sein, um dem Dichtungselement höhere Festigkeit zu verleihen. Bevorzugt enthält die Zusammensetzung die Polymere/Prepolymere und Vernetzer und/oder Katalysatoren und zusätzlich ein oder mehrere Bestandteile, ausgewählt aus der Gruppe bestehend aus Füllstoffen, Alterungs- und Lichtschutzadditiven, Haftvermittlern, Lösungsmittel und weiteren Funktionsadditiven. Bevorzugt enthält die Zusammensetzung die Polymere/Prepolymere und Vernetzer und/oder Katalysatoren, sowie Lösungsmittel und zusätzlich ein oder mehrere Bestandteile, ausgewählt aus der Gruppe bestehend aus Füllstoffen, Alterungs- und Lichtschutzadditiven, Haftvermittlern, und weiteren Funktionsadditiven.

Als Funktionsadditive sind außer dem Zusatz von Leitfähigkeitsruß beispielsweise Edelmetallpulver denkbar, um in Anwendungen ohne die Erfordernisse eines Isolators eine elektrische Leitfähigkeit zu bewirken.

Bevorzugt enthält die Zusammensetzung 3 % bis 97 % Polymere/Prepolymere einschließlich aller Additive, sowie 3%- 97% Lösemittel/Weichmacher, bezogen auf das Gesamtgewicht der Zusammensetzung. Der Katalysator oder mehrere Katalysatoren können beispielsweise in einer Gesamtmenge von 0,05-10%, bezogen auf das Gesamtgewicht der Zusammensetzung, verwendet werden. Die anderen Bestandteile können in üblichen Mengen verwendet werden.

Die reaktive, flüssige oder pastöse Zusammensetzung enthält ein oder mehrere Polymere, ausgewählt aus der Gruppe bestehend aus fluorierten Kohlenwaserstoffpolymeren (FKM, FFKM, FEPM), die zu Elastomeren vernetzt werden können.

Geeignete Fluorkohlenwasserstoffpolymere werden unter anderem von DuPont (Viton™), 3M (Dyneon™), Daikin (Dai El™) und Solvay (Tecnoflon™) auf dem Markt in einer großen Anzahl von Varianten sowohl als reines Polymer wie auch als reaktives Compound (reaktionsfähige Mischung) angeboten. Sie unterscheiden sich in verschiedenen Kategorien:
- Das Molekulargewicht und die eventuelle Verzweigung bewirken die späteren mechanischen Eigenschaften wie Shore-Härte, Elastizitätsmodul und den Druckverformungsrest. Diese Größen beeinflussen das Fließverhalten in Schmelze und Lösung und können vom Fachmann geeigneterweise ausgewählt werden.
- Das Vernetzungssystem (aminisch, anionisch oder peroxidisch) hat Einfluss auf die thermische und chemische Stabilität.
- Der Grad der Fluorierung ist wichtig für die chemische Resistenz. Fluorgehalte von 60 % bis über 70% sind üblich. Ein hoher Fluorgehalt bedeutet höhere Resistenz aber auch höhere Härte nach Shore A (ASTM D2240, Durometer A). Bevorzugt ist eine Shore A-Härte < 60. Da dies mit hoch fluorierten Produkten nicht möglich ist, wird bevorzugt ein nachfolgend beschriebener Schaum verwendet.
Die Klasse der FKM ist je nach Produktdesign aufgebaut aus Tetrafluorethylen (TFE), Hexafluorpropen (HFP), Vinylidenfluorid (VDF) oder Perfluormethylvinylether (PMVE), in der Regel aber aus Mischungen dieser Bausteine.

Die reaktive, flüssige oder pastöse Zusammensetzung enthält bevorzugt keine Silikonpolymere oder Silikonmonomere.

Eine geeignete Rezeptur auf Basis von peroxidisch vernetzbaren Polymeren sei exemplarisch gegeben (in Gewichtsanteilen):

### Rezeptur 1:

| | |
|---|---|
| Basispolymer | |
| (z. B. Tecnoflon™ P457, DAI-El™ G-802, Viton™ GF-200 S) | 100 |
| Füllstoff Ruß N990 | 20 |
| Vernetzer TAIC (Triallylisocyanurat) | 3,5 |
| Katalysator DCP | 2,5 |
| | |
| Methylethylketon MEK | 200 |

Die Zubereitung der gebrauchsfähigen Mischung erfolgt in der Regel im vorgesehenen Lösungsmittel in den Schritten Auflösung des Polymers, Zugabe der Additive, Vermischung und Entgasung. Denkbar ist auch die Herstellung einer festen Vormischung aus Polymer(en) und Additiven im Innenmischer oder auf einer Dreiwalze. Die feste Mischung ist besonders lagerstabil. Sie wird dann vor dem Verarbeiten im Lösungsmittel aufgelöst.

In Schritt (ii) wird die reaktive, flüssige oder pastösen Zusammensetzung auf ein oder mehrere Komponenten aufgetragen. Hierbei können ein oder mehrere Dichtungselemente gleichzeitig oder nacheinander auf einer oder mehreren Komponenten aufgebracht werden. Ein Dichtungselement aufbringen bedeutet hierbei, dass die Zusammensetzung in einer Geometrie aufgebracht wird, die eine formschlüssige Dichtung zwischen zwei Komponenten zulässt, wobei mehrere Dichtungselemente nebeneinander angeordnet sein können.

Eine Aufbringung als Doppelnaht, ggf. mit regelmäßig eingefügten Querstegen aus dem Füssigcompound ergibt gekammerte Dichtungssysteme mit höherer Sicherheit gegen Leckagen.

Das Aufbringen der festen oder pastösen Zusammensetzung kann in jeder beliebigen Dichtungsgeometrie erfolgen, beispielsweise als flächige Struktur/Schicht, Raupe, Doppelnaht, oder Doppelnaht mit Querstegen. Bevorzugt beträgt die Dicke der Zusammensetzung auf der Komponente nach dem Härten 0,05-10 mm. Durch mehrfaches Auftragen der Schichten übereinander ergibt sich ein weiter Gestaltungsspielraum. In Abhängigkeit des Drucks, der auf das Dichtungselement einwirkt, kann sich diese Dicke beispielsweise um 0- 50 % verringern.

Die flüssige oder pastöse Zusammensetzung wird erfindungsgemäß durch Druckluft oder Pumpen mittels einer Dosiernadel oder einer Spraydüse kontinuierlich, bahngesteuert oder im Jet-Verfahren bahn- oder matrixgesteuert diskontinuierlich im Punktraster aufgetragen werden.

Anschließend wird in Schritt (iii) entweder Schrittfolge (A) oder (B) durchgeführt. Diese Schrittfolgen unterscheiden sich dadurch, dass in (B) die reaktive, flüssige oder pastöse Zusammensetzung zu dem gewünschten, finalen Vernetzungsgrad ausgehärtet wird, wobei die Zusammensetzung vorher optional teilweise getrocknet wird, bevor das Dichtungselement mit einer weiteren Komponenten in Kontakt gebracht wird. In Schrittfolge (A) erfolgt ein vollständiges / teilweises Trocknen bzw. Entfernen von Lösungsmittel und/oder nur ein teilweise Härten der Zusammensetzung zu einer Vorstufe des Dichtungselements bevor das Dichtungselement mit einer weiteren Komponenten in Kontakt gebracht wird. Das teilweise Härten kann beispielsweise durch Stehenlassen an Luft erfolgen. Die vollständig / teilweise getrocknete und/oder teilweise vernetzte Vorstufe des Dichtungselements wird als "grüne Dichtung" bezeichnet und ist bevorzugt in einem Zustand, in dem es nicht mehr klebrig ist. Anschließend erfolgt die Härtung zu dem gewünschten, finalen Vernetzungsgrad, während das Dichtungselement bereits vormontiert in Kontakt mit benachbarten Komponenten ist. Beispielsweise erfolgt die Vernetzung und formschlüssige Verklebung der Komponenten bei einer Vernetzungstemperatur im Härteofen. Eine grüne Dichtung kann beispielsweise einen Restlösungsmittelgehalt von 0,001 - 10%, bevorzugt 0,1 - 10% oder 0,1 - 5%, weiter bevorzugt 0,1 - 1%, besonders bevorzugt jedoch < 0,1 %, beispielsweise 0,01 - <0,1%, bezogen auf das Gewicht, enthalten. Der Lösungsmittelgehalt kann gravimetrisch bestimmt werden.

In Schritt (AII)/(BII) wird ein Dichtungselement, das bereits mit einer Komponente verbunden ist, mit einer weiteren Komponente in Kontakt gebracht, wobei diese weitere Komponente an der Kontaktstelle entweder selbst ebenfalls ein Dichtungselement aufweist oder kein Dichtungselement an der Kontaktstelle aufweist, d.h. es werden bei der letzteren Variante nicht zwei Dichtungselemente in Kontakt miteinander gebracht.

In Schritt (AI) liegt die aufgebrachte Zusammensetzung nach Entfernen des verflüssigenden Lösungsmittels bzw. nach Abkühlen einer schmelzflüssigen Zusammensetzung trocken und klebfrei vor ("grüne Dichtung"). In diesem Zustand hat die Mischung noch thermoplastische Eigenschaften. Die Mischung kann dann sofort oder bei Bedarf später durch geeignete Reaktionsbedingungen in den vernetzten Zustand gebracht werden und bildet dann das gewünschte, vernetzte Elastomer.

Die reaktive flüssige oder pastöse Zusammensetzung in Schritt (ii) kann entweder
- ein schaumbildenden Mittels (z. B. Expancel DU™, Akzo Nobel, zur Erzielung einer geschlossenzelligen Schaumstruktur des Dichtungselements, oder
- elastisch verformbare, bereits expandierte Microcells (z.B. Expancel DE™, Akzo Nobel) mit organischer Polymerhülle zur Erzielung einer geschlossenzelligen Schaumstruktur, enthalten.

Dies ermöglicht eine höhere Nachgiebigkeit und einen besseren mechanischen Toleranzausgleich.

Als Schaumbildner können unexpandierte polymergekapselte Microcells (z.B. Expancel DU™, Akzo Nobel), die einen niedrigsiedenden Kohlenwasserstoff eingeschlossen haben, anorganische Karbonate und Hydrogenkarbonate mit einem Zersetzungspunkt unter 250 °C, besonders bevorzugt mikronisierte oder nanoscalige Anorganika, die bei den Aushärtetemperaturen von 120 °C bis 240 °C CO₂ und im Falle der Hydrogenkarbonate zusätzlich Wasser abspalten, verwendet werden. Weitere thermisch aktivierte Schaumbildner sind Azoverbindungen wie Azodicarbonamid in reiner Form wie auch mit Coaktivatoren auf Basis von Harnstoff.

Die reaktive flüssige oder pastöse Zusammensetzung in Schritt (ii) kann ein Lösungsmittel enthalten, das ausgewählt ist aus der Gruppe bestehend aus aliphatischen und aromatischen Ketonen; gesättigten aliphatischen und aromatischen Estern der Ameisensäure, der Kohlensäure, oder der niedermolekularen Carbonsäuren wie Propionsäure oder Essigsäure; niedrigmolekularer Ether, einschließlich der cyclischen Ether wie Tetrahydrofuran und Dioxan; oder aber auch Mischungen aus den Vorstehenden.

Das Härten der Zusammensetzung in Schritt (AI), (BI) oder (AIII) kann durch UV-Belichtung, Strahlungshärtung (z.B. Elektronenstrahlhärtung), oder Erwärmen erfolgen. Da in Schritt (AIII) das Dichtungselement bereits zwischen den Komponenten angeordnet ist, kann es sein, dass das Dichtungselement für UV-Licht oder andere Strahlen schwer zugänglich ist und somit ist das Härten durch Erwärmen bevorzugt. Bei den erfindungsgemäß verwendeten Fluorelastomeren FKM ist es besonders bevorzugt, eine Härtung durch erhöhte Temperatur zu bewirken.

Das Aufbringen der flüssigen oder pastösen Zusammensetzung in Schritt (ii) kann beispielsweise bei einer Temperatur oberhalb 20°C, bevorzugt oberhalb 60°C, weiter bevorzugt oberhalb 100°C, bevorzugt oberhalb 120°C, durchgeführt werden, wobei die Zusammensetzung bei dieser Temperatur flüssig oder pastös ist und die zu verbindenden Komponenten nicht schmelzen.

Das Aufbringen der flüssigen oder pastösen Zusammensetzung in Schritt (ii) kann beispielsweise bei einer Temperatur unterhalb von 30°C erfolgen wenn die Zusammensetzung bei dieser Temperatur flüssig oder pastös ist, beispielsweise da sie Lösungsmittel enthält. Das Aufbringen der Zusammensetzung bei erhöhter Temperatur wird so durchgeführt, dass die Temperatur signifikant niedriger ist als die Schmelztemperatur der Komponente mit dem höchsten Schmelz- oder Erweichungspunkt oder allein durch Zusatz eines geeigneten nicht reaktiven Lösungsmittels, das die Fließfähigkeit und homogene Vermischung der Reaktionskomponenten bewirkt. Dabei wird die Verarbeitungstemperatur zweckmäßigerweise unter der Siedetemperatur des Lösungsmittels oder -gemisches gewählt.

Die Zusammensetzung in Schritt (ii) kann eine oder mehrere Arten von fluorierten Kohlenwaserstoffpolymeren (FKM, FFKM, FEPM) als Elastomer enthalten, und wobei dieses Elastomer in Schritt (AI), (BI) oder (AIII) aminisch, anionisch oder besonders bevorzugt peroxidisch vernetzt wird.

Die Erfindung ermöglicht das Herstellen einer geschlossenen Funktionseinheit einer Vorrichtung, wobei die Vorrichtung ausgewählt ist aus der Gruppe bestehend aus Brennstoffzellen; Wärmetauschern; und chemischen Reaktoren, insbesondere Mikroreaktoren, von Elektrolysezellen, Batterien, Dialysatoren oder Kontaktoren, wobei die geschlossene Funktionseinheit mindestens ein Dichtungselement aus einem Elastomer enthält, wobei das Dichtungselement als Fügelement dient und mit mindestens einer Komponente der Funktionseinheit selbstklebend verbunden ist.

Das vernetzte Elastomer enthält ein oder mehrere Polymere, ausgewählt aus der Gruppe bestehend aus quervernetzten fluorierten Kohlenwasserstoffpolymeren (FKM, FFKM, FEPM).

Die geschlossene Funktionseinheit kann mittels dem erfindungsgemäßen Verfahren hergestellt werden, sodass alle Definitionen und Angaben bezüglich des Verfahrens gleichermaßen auf eine geschlossene Funktionseinheit zutreffen.

In einer bevorzugten Ausführungsform sind mindestens zwei benachbarte Komponenten, bevorzugt alle benachbarten Komponenten, der Funktionseinheit miteinander verklebt, bevorzugt zum Ersatz oder teilweisen Ersatz von mechanischen Hilfskonstruktionen und Montageelementen wie Schrauben und Klemmen, sodass eine verpressende Montage durch externe mechanische Montageelemente wie Rahmen und/oder Spannschrauben entfallen kann.

Die Erfindung betrifft auch die Verwendung einer reaktiven flüssigen oder pastösen Zusammensetzung, die zu einem vernetzten Elastomer gehärtet werden kann, als Vorstufe für ein Dichtungselement für eine geschlossenen Funktionseinheit einer Vorrichtung, wobei die Vorrichtung ausgewählt ist aus der Gruppe bestehend aus Brennstoffzellen; Wärmetauschern; und chemischen Reaktoren von Elektrolysezellen, Batterien, Dialysatoren oder Kontaktoren. Alle vorstehenden Definitionen und Angaben treffen auch auf die erfindungsgemäße Verwendung zu.

Das erfindungsgemäße Verfahren lässt sich reproduzierbar gemäß nachfolgender Verfahrensvorschrift nachvollziehen:

### Beispiel

### Polymerlösung gemäß Rezeptur 1:

10 ml bis 30 ml in Nordson EFD Optimum™ - Kartusche 30ml im Pico™-Tank,
Druck (Stickstoff): 3,5 bar
Ventil: Nordson EFD Pico™ MV 100
Steuergerät Nordson EFD DCON
PICO-Controller Nordson EFD zur Mengensteuerung
Einstellungen: Ventiltemperatur 27,5°C, Taktperiode 15 msec bis 20 msec, Ventilöffnungszeit: 3 msec bis 5 msec
Bahnsteuerung durch Siemens S7 auf Kern-Liebers-Portaldosieranlage, Verfahrgeschwindigkeit: variabel, bevorzugt 50 bis 100 mm /sec
Pico-Controller im Handshake mit S7-Pumpensteuerung
Substrat: Nicrofer™ hMo 5716 (ThyssenKrupp)
Auftragshöhe: 0,05 bis 0,3 mm je nach Verfahrgeschwindigkeit, Breite: 1,5 bis 2,0 mm, abhängig vom Abstand Ventil / Substrat
Das Produkt wurde nach 12 h Trocknung bei Raumtemperatur im Härtungsofen bei 180 °C für 2h vernetzt.

Ergebnis: Die Elastomernaht haftete fest auf dem Substrat, die Auslagerung bei 180°C im Gemisch Phosphorsäure /Polyphosphorsäure / Wasser bei 180 °C über 60 d führte nicht zur Ablösung der Naht. Das Elastomer blieb form- und gewichtsstabil, Quellung bzw. Versprödung traten nicht auf.

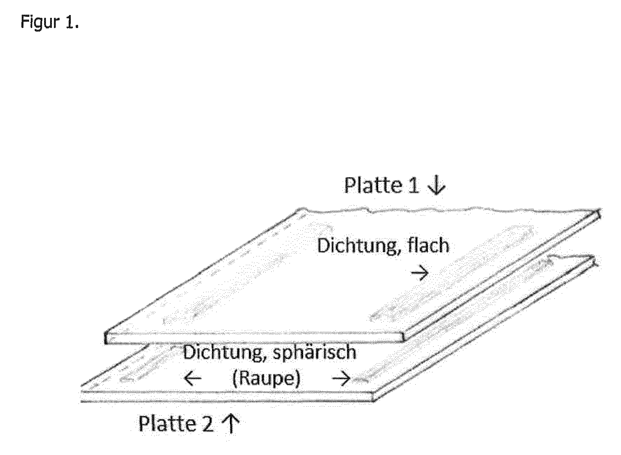

Figur 1 zeigt eine Elastomerdichtung auf einer Systemkomponente, wobei die Elastomerkomponente flüssig, in situ vernetzt und montagesicher aufgebracht ist.

## Patentansprüche

1. Verfahren zur Herstellung einer geschlossenen Funktionseinheit einer Vorrichtung, wobei die Vorrichtung ausgewählt ist aus der Gruppe bestehend aus Brennstoffzellen; Wärmetauschern; und chemischen Reaktoren von Elektrolysezellen, Batterien, Dialysatoren oder Kontaktoren, und wobei die geschlossene Funktionseinheit mindestens ein Dichtungselement aus einem Elastomer enthält, umfassend die Schritte:
(i) Bereitstellen von mindestens zwei, durch ein oder mehrere Dichtungselemente zu verbindende, Komponenten der Funktionseinheit;
(ii) Aufbringen einer reaktiven, flüssigen oder pastösen Zusammensetzung, die durch Vernetzen zu einem Elastomer gehärtet werden kann, auf mindestens eine der Komponenten aus Schritt (i);
(iii) Durchführen einer Schrittabfolge (A) oder (B):
Schrittabfolge (A)
(AI) Vollständiges, oder teilweise Trocknen und/oder teilweise Härten der reaktiven, flüssigen oder pastösen Zusammensetzung, die auf der/den Komponente(n) aus Schritt (ii) aufgebracht ist, um eine oder mehrere, mit der/den Komponente(n) selbstklebend verbundene Vorstufe(n) für (ein) Dichtungselement(e), zu erhalten;
(AII) In-Kontakt-Bringen der Komponente(n) aus Schritt (AI) mit der/den zu verbindenden Komponente(n);
(AIII) Härten der Vorstufe(n) für (ein) Dichtungselement(e) auf der/den Komponente(n) aus Schritt (AII), wobei ein Elastomer erhalten wird, um ein oder mehrere, mit der/den Komponente(n) selbstklebend verbundene(s) Dichtungselement(e), zu erhalten;
Schrittabfolge (B)
(BI) Härten der reaktiven, flüssigen oder pastösen Zusammensetzung, nach dem Entfernen von Lösungsmittel, die auf der/den Komponente(n) aus Schritt (ii) aufgebracht ist, wobei ein Elastomer erzeugt wird, um ein oder mehrere, mit der/den Komponente(n) selbstklebend verbundene(s) Dichtungselement(e), zu erhalten; und
(BII) In-Kontakt-Bringen der Komponente(n) aus Schritt (BI) mit der/den zu verbindenden Komponente(n); und
(iv) Erhalten der geschlossenen Funktionseinheit; wobei
die reaktive, flüssige oder pastöse Zusammensetzung ein oder mehrere Polymere enthält, ausgewählt aus der Gruppe bestehend aus fluorierten Kohlenwasserstoffpolymeren, die zu Elastomeren vernetzt werden können; und
die reaktive, flüssige oder pastöse Zusammensetzung durch Druckluft oder Pumpen mittels einer Dosiernadel oder einer Spraydüse kontinuierlich, bahngesteuert oder im Jet-Verfahren bahn- oder matrixgesteuert diskontinuierlich im Punktraster aufgetragen wird.

2. Verfahren nach Anspruch 1, **dadurch gekennzeichnet, dass** die zu verbindenden Komponenten die Form von Scheiben oder Platten aufweisen, und wobei benachbarte Scheiben oder Platten durch ein oder mehrere Dichtungselemente, oder durch ein oder mehrere Dichtungselemente in Kombination mit einem oder mehreren Distanzkörpern, in einer Stapelform miteinander verbunden werden.

3. Verfahren nach Anspruch 1 oder Anspruch 2, **dadurch gekennzeichnet, dass** die reaktive, flüssige oder pastöse Zusammensetzung ein oder mehrere unterschiedliche, zu Elastomeren oder thermoplastischen Elastomeren vernetzbare, Polymere; oder ein oder mehrere unterschiedliche, zu Elastomeren oder thermoplastischen Elastomeren vernetzbare, Prepolymere; oder eine Mischung dieses/dieser Polymer(e) und dieses/dieser Prepolymer(e) umfasst, und wobei die Zusammensetzung zudem ein oder mehrere Vernetzer und einen oder mehrere Härtungskatalysatoren, gegebenenfalls mineralische Füllstoffe und Säurefänger sowie Ruß und/oder Pigmente und Lösungsmittel umfasst.

4. Verfahren nach einem der Ansprüche 1-3, **dadurch gekennzeichnet, dass** die reaktive flüssige oder pastöse Zusammensetzung in Schritt (ii) entweder
- ein schaumbildenden Mittels zur Erzielung einer geschlossenzelligen Schaumstruktur des Dichtungselements, oder
- elastisch verformbare, bereits expandierte Microcells mit organischer Polymerhülle zur Erzielung einer geschlossenzelligen Schaumstruktur, enthält.

5. Verfahren nach einem der Ansprüche 1-4, **dadurch gekennzeichnet, dass** die reaktive flüssige oder pastöse Zusammensetzung in Schritt (ii) ein Lösungsmittel enthält, das ausgewählt ist aus der Gruppe bestehend aus aliphatischen und aromatischen Ketonen; gesättigten aliphatischen und aromatischen Estern der Ameisensäure; Kohlensäure, niedermolekularen Carbonsäuren, wie Propionsäure oder Essigsäure; niedrigmolekularer Ether, einschließlich der cyclischen Ether wie Tetrahydrofuran und Dioxan; oder aber auch Mischungen aus den Vorstehenden.

6. Verwendung einer reaktiven flüssigen oder pastösen Zusammensetzung, die ein oder mehrere Polymere enthält, ausgewählt aus der Gruppe bestehend aus fluorierten Kohlenwasserstoffpolymeren, die zu einem Elastomer durch Vernetzen gehärtet werden kann, als Vorstufe für ein Dichtungselement für eine geschlossenen Funktionseinheit einer Vorrichtung in einem Verfahren gemäß einem der Ansprüche 1-5, wobei die Vorrichtung ausgewählt ist aus der Gruppe bestehend aus Brennstoffzellen; Wärmetauschern; und chemischen Reaktoren von Elektrolysezellen, Batterien, Dialysatoren oder Kontaktoren.

## Claims

1. A process for making a closed functional unit of a device, wherein the device is selected from the group consisting of fuel cells; heat exchangers; and chemical reactors of electrolysis cells, batteries, dialysers, or contactors, and wherein the closed functional unit contains at least one elastomer sealing element, comprising the steps:
(i) providing at least two components of the functional unit, which are to be bound by one or more sealing elements;
(ii) applying a reactive liquid or paste-like composition, which can be cured into an elastomer by cross-linking, to at least one of the components of step (i);
(iii) performing a series of steps (A) or (B):
series of steps (A)
(AI) complete or partial drying and/or partial curing of the reactive liquid or paste-like composition applied onto the component(s) of step (ii) to obtain one or more precursor(s) for (a) sealing element(s), which are self-adhesively bound to the component(s);
(AII) contacting the component(s) of step (AI) with the component(s) to be bound;
(AIII)curing of the precursor(s) of (a) sealing element(s) on the component(s) of step (AII), wherein an eleastomer is obtained, to obtain one or more sealing element(s) that are self-adhesively bound to the component(s);
series of steps (B)
(BI) curing of the reactive liquid or paste-like composition applied to the component(s) of step (ii) after the removal of solvent, wherein an elastomer is produced, to obtain one or more sealing element(s) that are self-adhesively bound to the component(s); and
(BII) contacting the component(s) of step (BI) with the component(s) to be bound; and
(iv) obtaining the closed functional unit; wherein
the reactive liquid or paste-like composition contains one or more polymers selected from the group consisting of fluorinated carbon polymers capable of being cross-linked into elastomers; and
the reactive liquid or paste-like composition is applied continually, in a pathcontrolled manner, or in a jet process in a path- or matrix-controlled manner discontinually in a dot matrix by compressed air or pumps by means of a dispensing tip or spray nozzle.

2. The process of claim 1, **characterised in that** the components to be bound have the shape of disks or plates, and wherein adjacent disks or plates are bound to each other in a stacked form by one or more sealing elements or by one or more sealing elements in combination with one or more spacers.

3. The process of claim 1 or claim 2, **characterised in that** the reactive liquid or paste-like composition comprises one or more different polymers that can be cross-linked to elastomers or thermoplastic elastomers; or one or more different prepolymers that can be cross-linked to elastomers or thermoplastic elastomers; or a mixture of this/these polymer(s) and this/these prepolymer(s), and wherein the composition additionally comprises one or more cross-linking agents and one or more curing catalysts, optionally mineral fillers and acid scavengers as well as carbon black and/or pigments and solvents.

4. The process of any one of claims 1-3, **characterised in that** the reactive liquid or paste-like composition in step (ii) contains either
- a foaming agent for achieving a closed-cell foam structure of the sealing element, or
- elastically formable, already expanded microcells having an organic polymer coating for obtaining a closed-cell foam structure.

5. The process of any one of claims 1-4, **characterised in that** the reactive liquid or paste-like composition in step (ii) contains a solvent selected from the group consisting of aliphatic and aromatic ketones; saturated aliphatic and aromatic esters of formic acid; carbonic acid, low-molecular carboxylic acids such as propionic acid or acetic acid; low-molecular ether including cyclic ether such as tetrahydrofurane and dioxane; or also mixtures of the above.f

6. Use of a reactive liquid or paste-like composition containing one or more polymers selected from the group consisting of fluorinated carbon polymers, which can be cured into an elastomer by cross-linking, as a precursor for a sealing element for a closed functional unit of a device in a process according to any one of claims 1-5, wherein the device is selected from the group consisting of fuel cells; heat exchangers; and chemical reactors of electrolysis cells, batteries, dialysers, or contactors.

## Revendications

1. Procédé pour fabriquer une unité fonctionnelle fermée destinée à un dispositif, ce dispositif étant choisi parmi le groupe des piles à combustible, des échangeurs de chaleur et des réacteurs chimiques de cellules d'électrolyse, de piles, de dialyseurs ou de contacteurs, et ladite unité fonctionnelle fermée contenant au moins un joint d'étanchéité réalisé en élastomère, ce procédé comportant les étapes suivantes :
(i) la mise à disposition d'au moins deux éléments de l'unité fonctionnelle à assembler par un ou par plusieurs joints d'étanchéité,
(ii) l'application sur au moins un des éléments de l'étape (i) d'une composition réactive liquide ou pâteuse susceptible de durcir par réticulation pour former un élastomère,
(iii) la mise en oeuvre d'une succession d'étapes (A) ou (B) :
la succession d'étapes (A) consistant en
(AI) le séchage complet ou partiel et/ou le durcissement partiel de la composition réactive liquide ou pâteuse qui est appliquée sur l'élément/les éléments de l'étape (ii) afin d'obtenir une ou plusieurs préforme(s) pour joint(s) d'étanchéité assemblée(s) à l'élément/aux éléments de manière auto-adhésive,
(AII) la mise en contact de l'élément/des éléments de l'étape (AI) avec l'élément/les éléments à assembler,
(AIII) le durcissement de la/des préforme(s) pour joint(s) d'étanchéité sur l'élément/les éléments de l'étape (AII), un élastomère étant ainsi obtenu afin d'obtenir un ou plusieurs joint(s) d'étanchéité assemblé(s) à l'élément/aux éléments de manière auto-adhésive ;
la succession d'étapes (B) consistant en
(BI) le durcissement, après enlèvement du solvant, de la composition réactive liquide ou pâteuse qui est appliquée sur l'élément/les éléments de l'étape (ii), un élastomère étant ainsi obtenu afin d'obtenir un ou plusieurs joint(s) d'étanchéité assemblé(s) à l'élément/aux éléments de manière auto-adhésive, et
(BII) la mise en contact de l'élément/des éléments de l'étape (BI) avec l'élément/les éléments à assembler, et
(iv) l'obtention de l'unité fonctionnelle fermée,
la composition réactive liquide ou pâteuse contenant un ou plusieurs polymères choisis dans le groupe des polymères hydrocarbonés fluorés susceptibles de durcir par réticulation pour former des élastomères, et
la composition réactive liquide ou pâteuse étant appliquée de manière continue et à trajectoire commandée par air comprimé ou par pompage au moyen d'une aiguille de dépose ou d'un bec d'injection par pulvérisation, ou appliquée de manière discontinue par tramage par procédé de jet à trajectoire ou à matrice commandée.

2. Procédé selon la revendication 1, **caractérisé en ce que** les éléments à assembler se présentent sous forme de disques ou de plaques, ces disques ou ces plaques contigus étant assemblés les uns aux autres sous forme d'empilement par un ou plusieurs joints d'étanchéité, ou par un ou plusieurs joints d'étanchéité en combinaison avec un ou plusieurs corps d'écartement.

3. Procédé selon la revendication 1 ou la revendication 2, **caractérisé en ce que** la composition réactive liquide ou pâteuse contient un ou plusieurs polymères différents susceptibles de réticuler en des élastomères ou en des élastomères thermoplastiques, ou un ou plusieurs prépolymères susceptibles de réticuler en des élastomères ou des élastomères thermoplastiques, ou un mélange de ce/ces polymère(s) et de ce/ces prépolymères, cette composition réactive liquide ou pâteuse contenant en outre un ou plusieurs agents réticulants et un ou plusieurs catalyseurs de durcissement, le cas échéant des charges minérales et des capteurs d'acide ainsi que de la suie et/ou des pigments et des solvants.

4. Procédé selon l'une des revendications 1 à 3, **caractérisé en ce que** la composition réactive liquide ou pâteuse de l'étape (ii) contient soit
- un agent moussant afin d'obtenir une structure de mousse à cellules fermées pour joint d'étanchéité, soit
- des microcellules élastiquement déformables et déjà expansées avec une enveloppe polymère organique afin d'obtenir une structure de mousse à cellules fermées.

5. Procédé selon l'une des revendications 1 à 4, **caractérisé en ce que** la composition réactive liquide ou pâteuse de l'étape (ii) contient un solvant choisi parmi le groupe des cétones aliphatiques et aromatiques, des esters aliphatiques et aromatiques saturés de l'acide formique, de l'acide carbonique, des acides carboxyliques de faible masse moléculaire tels que l'acide propionique ou l'acide acétique, y compris les éthers cycliques tels que le tétrahydrofurane et le dioxane, ainsi que des mélanges de ceux-ci.

6. Utilisation d'une composition réactive liquide ou pâteuse contenant un ou plusieurs polymères choisis parmi le groupe des polymères hydrocarbonés fluorés susceptibles de durcir par réticulation pour former un élastomère en tant que préforme pour joint d'étanchéité destinée à une unité fonctionnelle fermée d'un dispositif dans le cadre d'un procédé selon l'une des revendications 1 à 5, ce dispositif étant choisi parmi le groupe des piles à combustible, des échangeurs de chaleur et des réacteurs chimiques de cellules d'électrolyse, de piles, de dialyseurs ou de contacteurs.
